# EUROPÄISCHE PATENTSCHRIFT

(11) **EP 1 922 220 B1**
(45) Veröffentlichungstag und Bekanntmachung des Hinweises auf die Patenterteilung: **20.04.2011**
(21) Anmeldenummer: 06791364.0
(22) Anmeldetag: 08.09.2006
(51) Int. Cl.: B60J 7/22

(54) **FAHRZEUGDACH MIT MINDESTENS ZWEI DECKELELEMENTEN**
VEHICLE ROOF WITH AT LEAST TWO COVER ELEMENTS
TOIT POUR VEHICULE COMPRENANT AU MOINS DEUX ELEMENTS DE RECOUVREMENT

(30) Priorität: 09.09.2005 DE 102005043019
(43) Veröffentlichungstag der Anmeldung: 21.05.2008
(73) Patentinhaber: Webasto AG, 82131 Stockdorf (DE)
(72) Erfinder: DE JONG, Chris, NL-8014 PR Zwolle (NL)
(86) Internationale Anmeldenummer: PCT/DE2006/001587
(87) Internationale Veröffentlichungsnummer: WO 2007/028377

(56) Entgegenhaltungen:
- EP-B1- 0 727 331
- DE-A1- 1 946 161
- DE-A1- 3 522 781
- DE-A1- 10 062 156
- US-A- 5 941 598

## Beschreibung

Die Erfindung betrifft ein Fahrzeugdach mit mindestens zwei Deckelelementen, die eine Dachöffnung wahlweise verschließen oder wenigstens teilweise freigeben, nach dem Oberbegriff des Patentanspruchs 1 bzw. des Patentanspruchs 8.

Ein derartiges Fahrzeugdach ist aus der EP 0 727 331 B1 bekannt. Bei diesem Fahrzeugdach dient das vordere Deckelelement als Windabweiser und das hintere Deckelelement als Schiebedeckel. Das vordere Deckelelement ist mit seiner Hinterkante über einen festen Fahrzeugdachbereich ausstellbar. Das hintere Deckelelement ist unter den festen Fahrzeugdachbereich absenkbar und entlang von beidseitig der Dachöffnung angeordneten, dachfesten Führungsschienen verfahrbar. Um die verschiedenen Betriebsstellungen der beiden Deckelelemente zu realisieren, ist ein Betätigungsmechanismus vorgesehen, der die beiden Deckelelemente gemeinsam antreibt.

Des Weiteren ist aus der DE 35 22 781 A1 ein Fahrzeugdach der einleitend genannten Gattung mit einem vorderen und einem hinteren Deckelelement bekannt, bei dem das vordere Deckelelement mittels einer im Bereich der Schwenkachse vorgesehenen Feder in Ausstellrichtung vorgespannt ist und das durch einen Druck, der von einem Gleitelement für das hintere Deckelelement ausgeübt wird, absenkbar ist. Bei einer derartigen Auslegung muss die Feder, um starken Windkräften hinreichend entgegenwirken zu können, stark ausgebildet sein. Dies wirkt sich jedoch nachteilig beim Schließen des vorderen Deckelelementes aus, da hohe Antriebskräfte erforderlich sind, die der Federkraft entgegenwirken.

Der Erfindung liegt die Aufgabe zugrunde, ein Fahrzeugdach der einleitend genannten Gattung zu schaffen, das mit einem robusten und kompakten Antriebsmechanismus für die beiden Deckelelemente versehen ist.

Diese Aufgabe ist erfindungsgemäß durch das Fahrzeugdach mit den Merkmalen des Patentanspruchs 1 und durch das Fahrzeugdach mit den Merkmalen des Patentanspruchs 8 gelöst.

Die Erfindung hat also ein Fahrzeugdach mit mindestens zwei, eine Dachöffnung wahlweise verschließenden oder wenigstens teilweise freigebenden Deckelelementen zum Gegenstand, von denen ein vorderes mit seiner Hinterkante über einen festen Fahrzeugdachbereich ausstellbar ist und von denen ein hinteres als Schiebedeckel dient und unter den festen Fahrzeugdachbereich absenkbar und entlang von beidseits der Dachöffnung angeordneten, dachfesten Führungsschienen verfahrbar ist. Ein Betätigungsmechanismus für die beiden Deckelelemente ist derart ausgebildet, dass er für jede Führungsschiene einen Antriebsschlitten umfasst, der mit einer Steuerbahn versehen ist, die mit einem Ausstellhebel für das vordere Deckelelement zusammenwirkt, der an einem schwenkbaren Träger des vorderen Deckelelements angelenkt ist. Die Ausstellbewegung des Ausstellhebels wird mittels einer Feder unterstützt. Durch die Steuerung der Ausstellbewegung mittels des Antriebsschlittens und die Unterstützung der Ausstellbewegung durch die Feder wird eine robuste Lagerung des vorderen Deckelelementes ermöglicht. Die Feder sichert das vordere Deckelelement zudem in Ausstellposition. Die von dem Ausstellhebel gebildete mechanische Stütze kann auch großen Windkräften standhalten.

Der Ausstellhebel, von dem ein Ende an dem Träger des vorderen Deckelelementes angelenkt ist, ist bei einer speziellen Ausführungsform mit seinem anderen Ende verschiebbar und drehbar im Bereich der Führungsschiene gelagert. Ausgehend von einer im Wesentlichen liegenden Anordnung des Ausstellhebels, in der sich das vordere Deckelelement in Schließstellung befindet, bewirkt ein Verschieben des im Bereich der Führungsschiene gelagerten Endes ein Aufstellen des Ausstellhebels und damit ein Ausstellen des vorderen Deckelelements.

Die Feder wirkt vorzugsweise so, dass die Ausstellbewegung des Ausstellhebels, d.h. das Verschieben des einen Endes des Ausstellhebels in der Führungsschiene unterstützt wird. Ein Schenkel der Feder greift hierbei vorzugsweise an dem Träger des Deckelelementes und ein weiterer Schenkel der Feder greift vorzugsweise an dem Ausstellhebel an. Die Feder unterstützt also ein Aufspreizen des Ausstellhebels und des schwenkbaren Trägers des vorderen Deckelelements.

Die Feder kann als Spiralfeder ausgebildet sein, welche insbesondere an einem ein Gelenk zwischen dem Träger und dem Ausstellhebel bildenden Zapfen gelagert ist.

Um das Risiko eines Verkantens des Ausstellhebels bei seiner Ausstellbewegung zu minimieren, ist dieser vorzugsweise über mindestens einen Führungsstift bzw. -zapfen in einer führungsschienenfesten Führungsbahn geführt.

Ein ungewolltes Ausstellen des vorderen Deckelelementes kann in vorteilhafter Weise verhindert werden, wenn der Ausstellhebel mit einem Sicherungszapfen versehen ist, der in Schließstellung des vorderen Deckelelementes in eine Ausnehmung des Antriebsschlittens derart eingreift, dass er an einer oberen Wandung des Antriebsschlittens anliegt.

Um das vordere Deckelelement möglichst widerstandsfrei ohne Kollision mit einem vorderen Rand der Dachöffnung aufschwenken zu können, ist es zweckmäßig, dieses bei seiner Ausschwenkbewegung geringfügig in Richtung Fahrzeugheck zu verlagern. Um dies zu ermöglichen, ist der Träger des vorderen Deckelelementes im Bereich seines vorderen Endes vorteilhaft mit einer Drehlagerzunge ausgebildet. Diese kann mit einer Kunststoffumspritzung versehen sein, durch die die Reibungskräfte beim Verlagern des vorderen Deckelelementes minimiert werden. Der Versatz des vorderen Deckelelements kann durch ein Ziehen des Antriebsschlittens an dem Sicherungszapfen des Ausstellhebels erfolgen.

Eine besonders stabile Ausführungsform des Fahrzeugdachs nach der Erfindung kann erreicht werden, wenn der Ausstellhebel für das vordere Deckelelement im Wesentlichen U-förmig ausgebildet ist und der Antriebsschlitten zwischen zwei Schenkeln des Ausstellhebels verfahrbar ist.

Die Erfindung hat des Weiteren ein Fahrzeugdach der einleitend genannten Gattung zum Gegenstand, bei dem der Betätigungsmechanismus für jede Führungsschiene jeweils eine Schlitteneinheit umfasst, die für das vordere Deckelelement und das hintere Deckelelement jeweils eine Steuerbahn umfasst, wobei die Steuerbahnen derart ausgebildet sind, dass ein Verfahren der Schlitteneinheiten in Richtung Fahrzeugheck ausgehend von einer Schließstellung beider Deckelelemente zunächst ein Ausschwenken beider Deckelelemente in Lüftstellung, ein Weiterverfahren der Schlitteneinheiten in Richtung Fahrzeugheck ein Zurückschwenken und Absenken des hinteren Deckelelementes und dann ein Zurückziehen des hinteren Deckelelementes unter einen rückwärtigen Dachhautabschnitt bewirkt.

Es wird also ein Dachsystem bereitgestellt, das zwei Deckelelemente aufweist, die gemeinsam in Lüftstellung gebracht werden können, was die Luftzufuhr in den Fahrzeuginnenraum günstig beeinflusst. Beide Deckelelemente werden mittels der gleichen Schlitteneinheiten betätigt.

Vorzugsweise wird die Bewegung des hinteren Deckelelementes so gesteuert, dass die diesem Deckelelement zugeordnete Steuerbahn zum Verschwenken des hinteren Deckelelementes mit einem auf das hintere Deckelelement wirkenden Hub- und Senkhebel zusammenwirkt.

Der Hub- und Senkhebel kann so ausgebildet sein, dass er mit einem Ende verschwenkbar in einer Führungsbahn der betreffenden Führungsschiene geführt ist und mit seinem anderen Ende auf das hintere Deckelelement wirkt. Zwischen den beiden Enden greift die Steuerbahn der Schlitteneinheit an.

Um die Schwenkbewegung des Hub- und Senkhebels für das hintere Deckelelement zu verstärken und damit den Verstellbetrag des hinteren Deckelelementes zu vergrößern, kann ein Verstärkungshebel vorgesehen sein, auf den der Hub- und Senkhebel wirkt und der mit einem Ende in einer Führungsbahn der Führungsschiene geführt ist und mit seinem anderen Ende an dem hinteren Deckelelement angreift. Insbesondere kann er an einem verschenkbaren Träger des hinteren Deckelelementes angreifen.

Zur Begrenzung und Definierung des maximalen Ausstellgrads des hinteren Deckelelementes kann an dem Hub- und Senkhebel ein Anschlag für den Verstärkungshebel ausgebildet sein. In analoger Weise kann alternativ auch an dem Verstärkungshebel ein Anschlag für den Hub- und Senkhebel vorgesehen sein.

Um den Betätigungsmechanismus für das vordere Deckelelement und für das hintere Deckelelement nach Bauteilen zu trennen, können die Schließeinheiten jeweils einen vorderen Antriebsschlitten, der mit dem vorderen Deckelelement zusammenwirkt, und einen hinteren Antriebsschlitten umfassen, der mit dem Hub- und Senkhebel für das hintere Deckelelement zusammenwirkt.

Um eine möglichst starre Verbindung zwischen den beiden Antriebsschlitten der Schlitteneinheit zu realisieren, können die beiden Antriebsschlitten über eine Antriebkabelplatte miteinander verbunden sein, an der ein drucksteifes Antriebskabel fixiert ist. Dieses ist wiederum mit einem herkömmlichen, beispielsweise rückwärtig von der Dachöffnung angeordneten Antriebsmotor verbunden. Die Antriebskabelplatte kann mit einem Führungsabschnitt versehen sein, der in einer Führungsbahn der zugeordneten Führungsschiene geführt ist.

Zum Verschwenken kann der hintere Träger an seinem vorderen Ende über einen Schwenkzapfen in einem eine Schwenkachse definierenden Führungsschieneneinsatz gelagert sein, der aus einem Kunststoffspritzteil gebildet sein und gleichzeitig eine Kulissenbahn für den oben beschriebenen Stabilisierungszapfen des vorderen Ausstellhebels aufweisen kann.

Der vordere Antriebsschlitten kann insbesondere so ausgebildet sein, dass er eine Kulissenbahn aufweist, die zum Absenken eines vorderen Endes des Träger des hinteren Deckelelementes dient. Ein Absenken des vorderen Randes des Deckelelementes kann nämlich erforderlich sein, um die Schwenkzapfen der Träger des hinteren Deckelelementes freizugeben und das hintere Deckelelement unter eine rückwärtige Dachhaut verfahren zu können. Der Träger ist nämlich in Schwenkstellung zweckmäßig an seinem vorderen Ende drehbar fixiert. Zum Verschieben des hinteren Deckelelements wird der Träger durch Absenken von dessen vorderen Ende freigegeben.

Der Ausstellmechanismus für das vordere Deckelelement bzw. der Antriebsschlitten für das vordere Deckelelement kann ansonsten in der oben beschriebenen Weise ausgeführt sein.

Weitere Vorteile und vorteilhafte Ausgestaltungen des Gegenstands nach der Erfindung sind der Beschreibung, der Zeichnung und den Patentansprüchen entnehmbar.

Zwei Ausführungsbeispiele des Gegenstandes nach der Erfindung sind in der Zeichnung schematisch vereinfacht dargestellt und werden in der nachfolgenden Beschreibung näher erläutert. Es zeigt
- Fig. 1: eine perspektivische Draufsicht eines Fahr- zeugsdachs mit zwei Deckelelementen in Schließstellung;
- Fig. 2: die beiden Deckelelemente in Lüftstellung;
- Fig. 3: ein Deckelelement in Lüftstellung und das an- dere Deckelelement in Schließstellung;
- Fig. 4: ein Deckelelement in Ausstellposition und das andere Deckelelement in zurückgefahrenem Zu- stand;

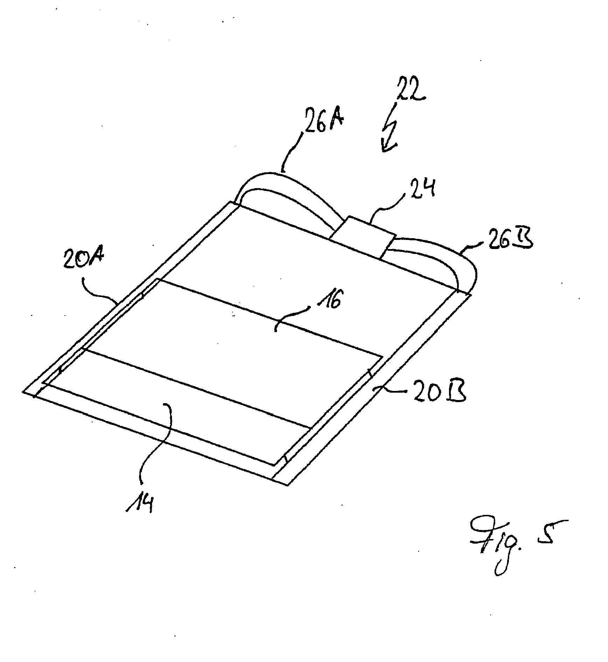

- Fig. 5: eine die beiden Deckelelemente und einen An- trieb umfassende Einbaukassette;
- Fig. 6: einen Betätigungsmechanismus für die beiden Deckelelemente, der einer in Fahrtrichtung linken Führungsschiene zugeordnet ist, in ei- ner perspektivischen Darstellung;
- Fig. 7: eine weitere perspektivische Darstellung des in Fig. 6 dargestellten Betätigungsmechanis- mus;
- Fig. 8: eine Seitenansicht eines vorderen Abschnitts des Betätigungsmechanismus bei der in Fig. 1 dargestellten Deckelelementstellung;
- Fig. 9: eine Seitenansicht des vorderen Abschnitts des Betätigungsmechanismus bei der in Fig. 2 dargestellten Deckelelementstellung;
- Fig. 10: eine Seitenansicht des vorderen Abschnitts des Betätigungsmechanismus bei der in Fig. 3 dargestellten Deckelelementstellung;
- Fig. 11: eine Seitenansicht eines hinteren Abschnitts des Betätigungsmechanismus bei der in Fig. 1 dargestellten Deckelelementstellung;
- Fig. 12: eine Seitenansicht des hinteren Abschnitts des Betätigungsmechanismus bei der in Fig. 2 dargestellten Deckelelementstellung;
- Fig. 13: eine Seitenansicht des hinteren Abschnitts des Betätigungsmechanismus bei der in Fig. 4 dargestellten Deckelelementstellung;
- Fig. 14: eine perspektivische Darstellung einer alter- nativen Ausführungsform eines Betätigungsme- chanismus für die beiden Deckelelemente; und
- Fig. 15: eine weitere perspektivische Darstellung des in Fig. 14 dargestellten Betätigungsmechanis- mus.

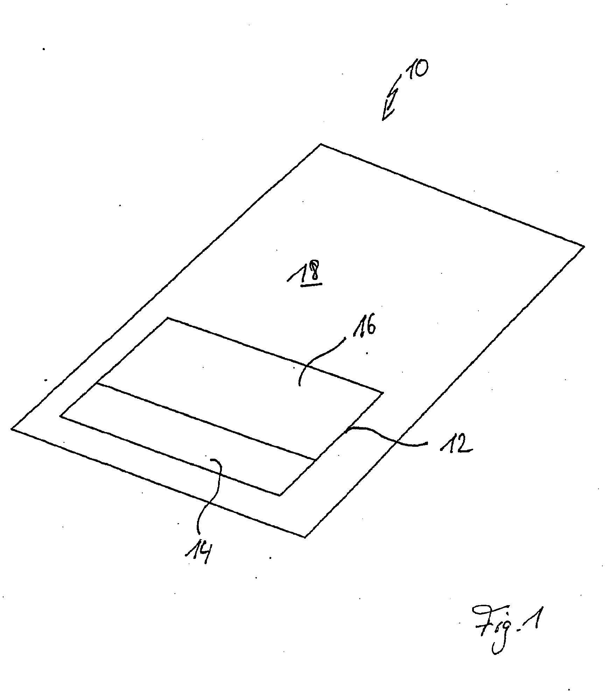

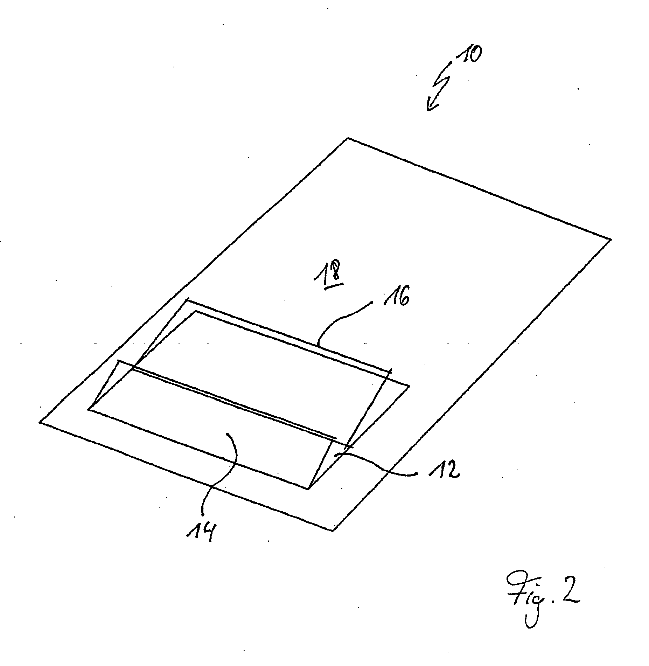

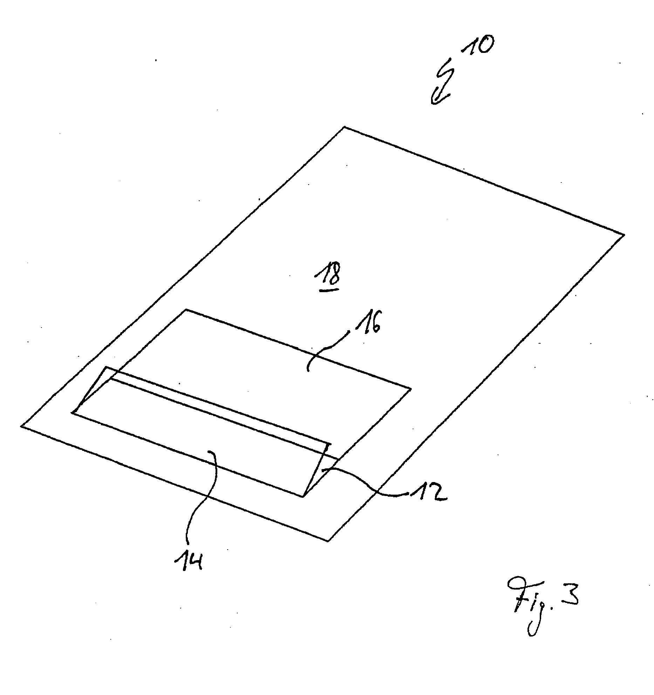

In der Zeichnung ist ein Fahrzeugdach 10 dargestellt, das mit einer Dachöffnung 12 versehen ist, welche mittels eines in Fahrtrichtung vorderen Deckelelementes 14 und eines in Fahrtrichtung hinteren Deckelelementes 16 wahlweise verschließbar oder zumindest teilweise freigebbar ist. Die beiden Deckelelemente 14 und 16 können dabei verschiedene Stellungen annehmen. Ausgehend von der in Fig. 1 dargestellten Schließstellung der beiden Deckelelemente 14 und 16 kann eine Anordnung der beiden Deckelelemente 14, 16 realisiert werden, bei der beide Deckelelemente 14, 16 ausgestellt sind und mithin eine sogenannte Lüftstellung einnehmen. Diese Lüftstellung, die auch Twin-Vent-Stellung genannt wird, ist in Fig. 2 dargestellt. Des Weiteren kann eine Anordnung realisiert werden, bei der nur das vordere Deckelelement 14 ausgestellt ist und sich somit in Lüftstellung befindet, wohingegen das hintere Deckelelement 16 geschlossen ist. Diese Anordnung der Deckelelemente 14, 16 ist Fig. 3 zu entnehmen.

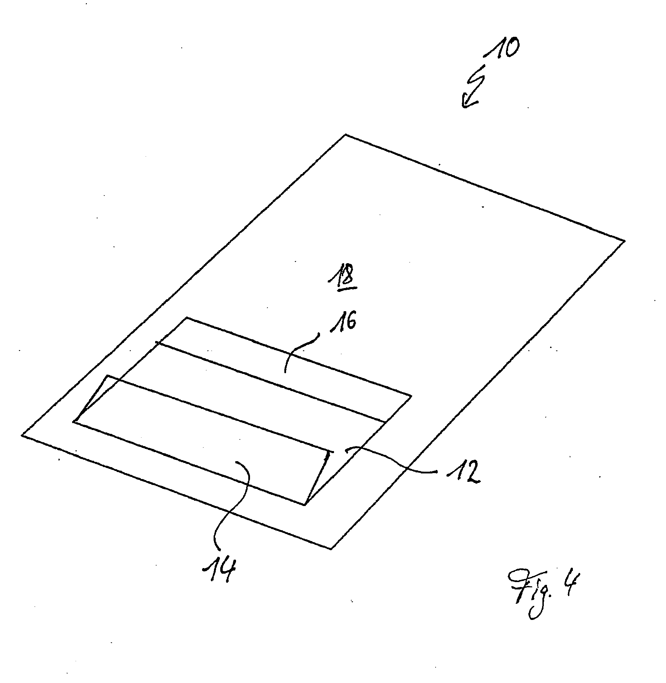

Wie insbesondere Fig. 4 zu entnehmen ist, stellt das hintere Deckelelement 16 auch einen Schiebedeckel dar, der unter einen rückwärtig von der Dachöffnung 12 angeordneten Dachhautbereich 18 verfahren werden kann. In dieser Stellung des hinteren Deckelelementes 16 ist das vordere Deckelelement 14 ausgestellt, so dass es ein Windabweiserelement bzw. eine Windabweiserlamelle bildet.

Zur Lagerung der beiden Deckelelemente 14 und 16 und zur Führung des hinteren Deckelelementes 16 bei dessen Verfahren in Fahrzeuglängsrichtung weist das Fahrzeugdach zwei beidseits der Dachöffnung 12 angeordnete Führungsschienen 20A, 20B auf, die Bestandteil einer Dachkassette 22 sind, welche als Baueinheit nachträglich in ein Fahrzeugdach einsetzbar ist.

Zur Betätigung der Deckelelemente 14, 16 ist jeder Führungsschiene 20A bzw. 20B jeweils ein Betätigungsmechanismus zugeordnet, der mittels eines am rückwärtigen Rand der Dachkassette 22 angeordneten Elektromotors 24 antreibbar ist, der auf zwei drucksteife Antriebskabel 26A, 26B wirkt. Das Antriebskabel 26A wirkt auf den in der Führungsschiene 20A geführten Betätigungsmechanismus und das Antriebskabel 26B wirkt auf den in der Führungsschiene 20B geführten Betätigungsmechanismus.

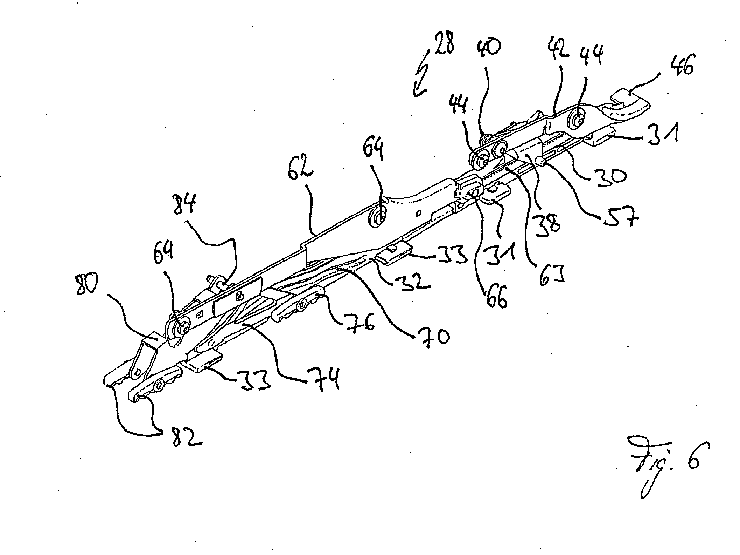

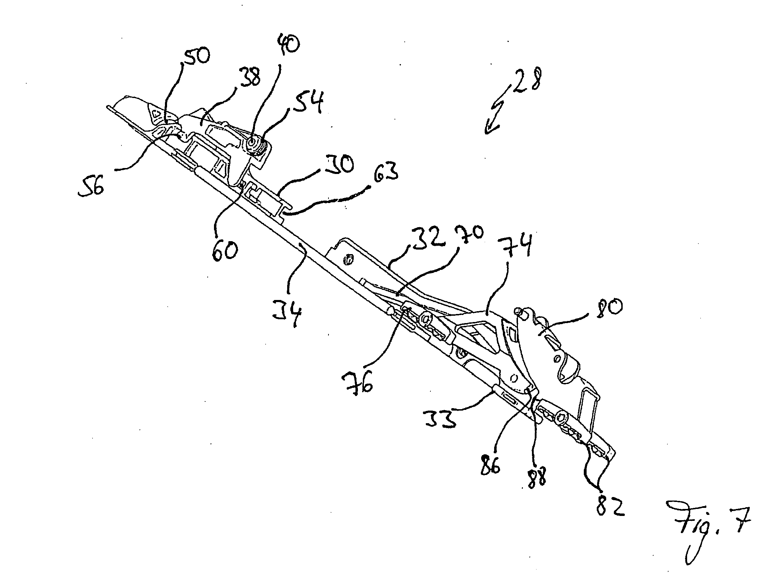

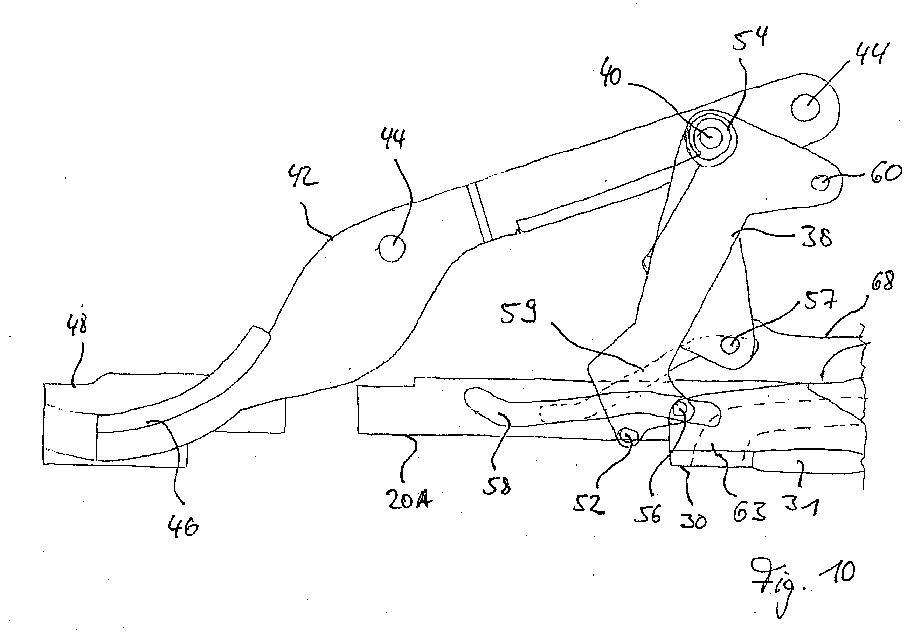

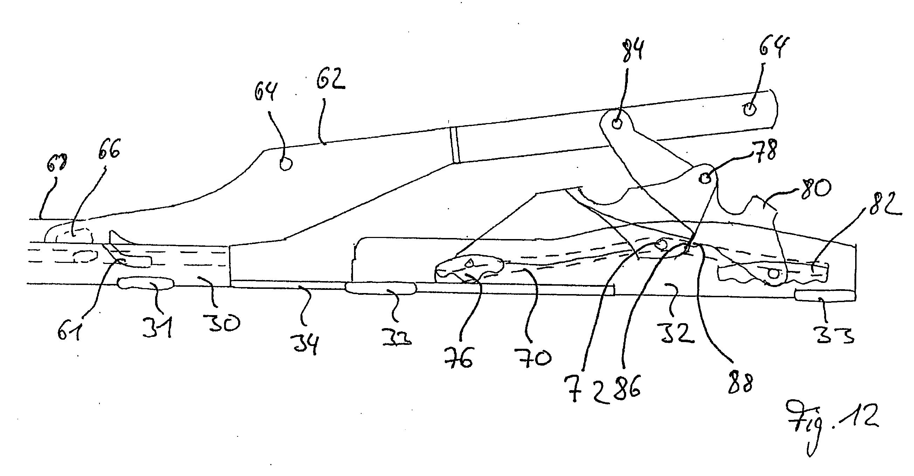

Die in den beiden Führungsschienen 20A und 20B geführten Betätigungsmechanismen sind bezüglich der Fahrzeuglängsmittelebene spiegelsymmetrisch ausgebildet, weshalb nachfolgend nur auf den in der in Fahrtrichtung links angeordneten Führungsschiene 20B geführten Betätigungsmechanismus Bezug genommen wird, der in den Figuren 6 bis 13 detailliert dargestellt ist und mit dem Bezugszeichen 28 versehen ist.

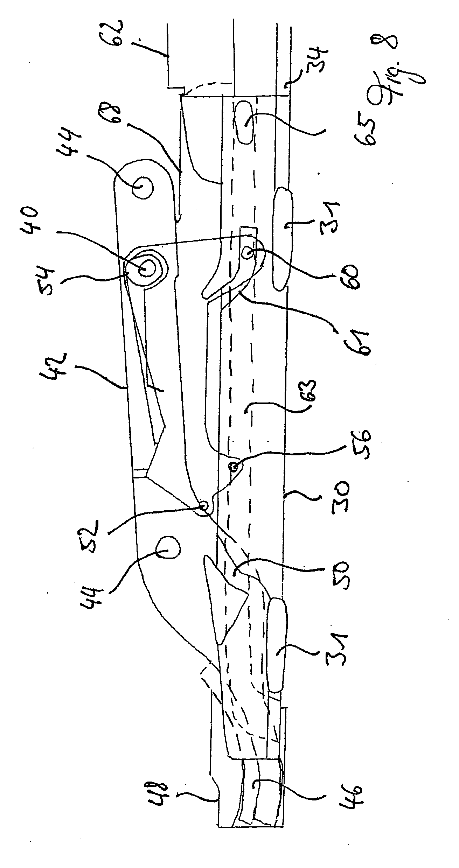

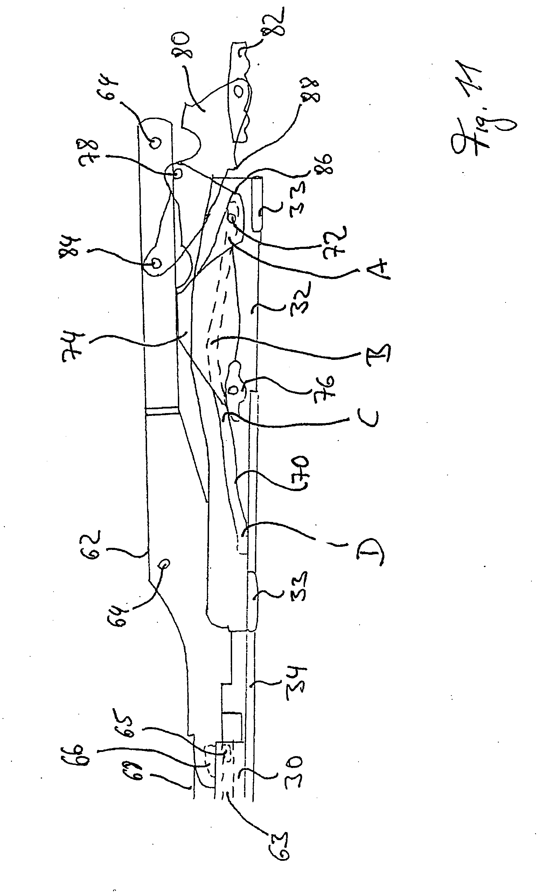

Der Betätigungs- bzw. Antriebsmechanismus 28 umfasst einen insbesondere in den Figuren 8 bis 10 dargestellten vorderen Antriebsschlitten 30 und einen insbesondere in den Figuren 11 bis 13 dargestellten hinteren Antriebsschlitten 32, welche eine Schlitteneinheit bilden und hierzu über eine Antriebskabelplatte 34 miteinander verbunden sind, welche wiederum mit dem Antriebskabel 26B verbunden ist.

Die Antriebskabelplatte 34 weist einen im Wesentlichen zylindrischen Führungsabschnitt 36 auf, der im Wesentlichen mit dem Antriebskabel 26B fluchtet und in einem hier nicht näher dargestellten Führungskanal der Führungsschiene 20B geführt ist, der auch zur Führung des Antriebskabels 26B dient.

Der vordere Antriebsschlitten 30, der über Gleitelemente in der Führungsschiene 20A geführt ist, ist dem vorderen Deckelelement 14 zugeordnet und dient im Wesentlichen dazu, das vordere Deckelelement auszustellen und wieder zurück in Schließstellung zu bringen. Hierzu wirkt der vordere Antriebsschlitten 30 auf einen im Wesentlichen umgekehrt U-förmig ausgebildeten Ausstellhebel 38, der über eine Gelenkachse 40 mit einem an seinem vorderen Ende schwenkbar gelagerten Träger 42 für das vordere Deckelelement 14 verbunden ist. Zur Fixierung des vorderen Deckelelementes 14 weist der Träger 42 zwei in Fahrzeugquerrichtung ausgerichtete Bohrungen 44 auf.

Zur schwenkbaren Lagerung ist der Träger 42 an seinem vorderen Ende mit einer so genannten Drehlagerzunge 46 versehen, die kunststoffumspritzt ist und in führungsschienenfesten Führungseinrichtungen 48 geführt ist.

Wie insbesondere den Figuren 8 bis 10 zu entnehmen ist, weist der vordere Antriebsschlitten 30 eine Kulissen- bzw. Steuerbahn 50 auf, die mit einem Zapfen 52 des Ausstellhebels 38 zusammenwirkt. Die Steuerbahn 50 hat einen in Richtung Fahrzeugheck ansteigenden Verlauf.

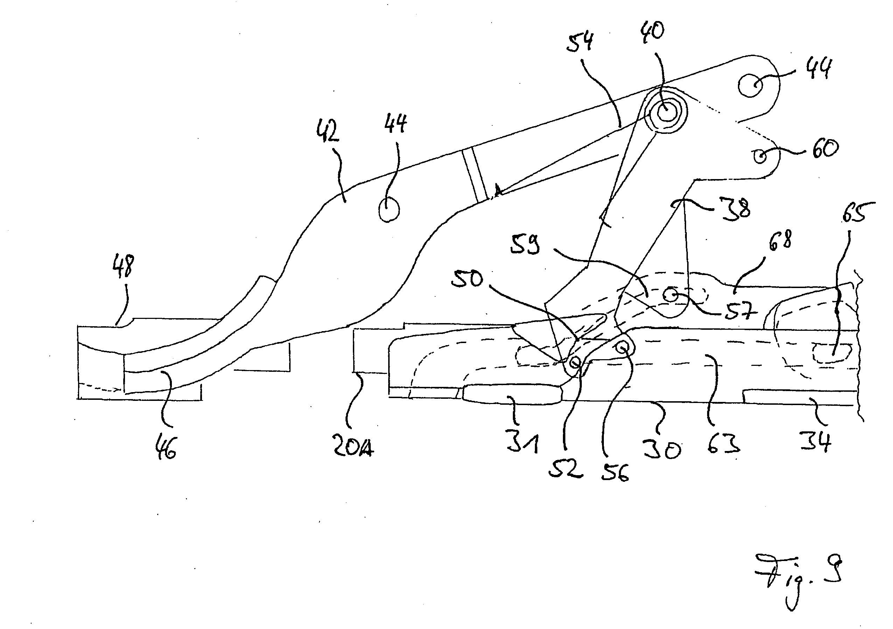

In der in den Figuren 6 bis 8 dargestellten Anordnung des Betätigungsmechanismus 28 ist das vordere Deckelelement 14 geschlossen, d.h. der Träger 42 des vorderen Deckelelementes 14 befindet sich in einer abgesenkten Stellung. In dieser Stellung des Trägers 42 hat auch der Ausstellhebel 38 eine im Wesentlichen liegende Anordnung. Wird nun die Schlitteneinheit und damit der vordere Antriebsschlitten 30 nach hinten, d.h. in Fig. 8 nach rechts bewegt, erfährt der Zapfen 52 des Ausstellhebels 38 eine Verschiebung in der Steuerbahn 50, was eine Ausstellbewegung des Ausstellhebels 38 auslöst, wodurch wiederum der Träger 42 und damit das vordere Deckelelement 14 ausgestellt werden. Hierbei findet eine Aufspreizung des Trägers 42 und des Ausstellhebels 38 statt, wie Fig. 9 zu entnehmen ist.

Die Ausstellbewegung wird durch eine im Bereich der Gelenkachse 40 gelagerte Spiralfeder 54 unterstützt, die einen die Gelenkachse 40 definierenden Lagerzapfen des Ausstellhebels 38 umgreift und zwei Schenkel aufweist, von denen einer an dem Träger 42 und der andere an dem Ausstellhebel 38 angreift, wobei die Enden der Schenkel jeweils in eine Nut des Trägers 42 bzw. des Ausstellhebels eingreifen können. Die Spiralfeder 54 unterstützt das Aufspreizen des Trägers 42 und des Ausstellhebels 38 und sichert die ausgestellte Anordnung des vorderen Deckelelements 14.

Des Weiteren umfasst der Ausstellhebel 38 beidseits in Fahrzeugquerrichtung abstehende Führungszapfen 56 bzw. 57, die jeweils in einer führungsschienenfesten Führungsbahn 58 bzw. 59 geführt sind und die einem Verkanten des Ausstellhebels 38 bei dessen Schwenkbewegung entgegenwirken.

Zur Sicherung der Schließstellung des Deckelelementes 14 ist an dem Ausstellhebel 38 ein Sicherungsstift 60 ausgebildet, der in der in Fig. 8 dargestellten Anordnung in eine Ausnehmung 61 an der Oberseite des vorderen Antriebsschlittens 30 eingreift und hierbei an einer oberen Wandung des vorderen Antriebsschlittens 30 anliegt. Mittels des Sicherungsstiftes 60 kann das vordere Deckelelement 14 zudem zum Öffnen geringfügig in Richtung Fahrzeugheck versetzt werden, so dass beim Aufschwenken keine Kollision zwischen dem vorderen Deckelelement 14 und dem vorderen Rand der Dachöffnung 12 erfolgt. Dies wird dadurch erreicht, dass der vordere Antriebsschlitten 28 beim Zurückfahren in der Führungsschiene 20A an dem Sicherungsstift 60 anzieht und damit auf den Ausstellhebel 38 und den Träger 42 eine in Richtung Fahrzeugheck gerichtete Kraft ausübt. Erst anschließend bewirkt das Zusammenwirken der Steuerbahn 50 und des Zapfens 52 ein Ausstellen des Ausstellhebels 38.

Der hintere Antriebsschlitten 32, der insbesondere in den Figuren 11 bis 13 dargestellt ist, ist entsprechend dem vorderen Antriebsschlitten 30 über Gleitelemente 33 in Fahrzeuglängsrichtung verschiebbar in Führungsbahnen der Führungsschiene 20B geführt und dient zur Verstellung des hinteren Deckelelementes 16, das beidseits an einem sich in Fahrzeuglängsrichtung erstreckenden Träger 62 fixiert ist, welcher hierzu mit zwei Fixierbohrungen 64 versehen ist.

Der Träger 62 hat an seinem vorderen Ende einen Schwenkzapfen 66, der eine Schwenkachse des Trägers 62 bildet. Der Schwenkzapfen 66 ist in der in Fig. 11 dargestellten Anordnung in einer angehobenen Stellung in einem aus Kunststoff gefertigten Führungsschieneneinsatz 68 derart gelagert, dass eine Längsverschiebung des Trägers 62 entlang der Führungsschiene 20B gesperrt ist.

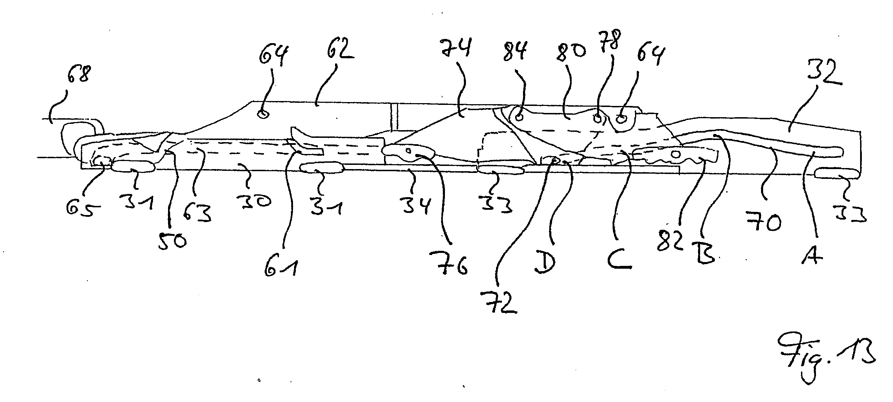

Zum Absenken des vorderen Endes des Trägers 62 ist an dem vorderen Antriebsschlitten 30 eine Steuerbahn 63 vorgesehen, in die ein in Fahrzeugquerrichtung abstehender, an der.dem Schwenkzapfen 66 abgewandten Seite des Trägers 62 angeordneten Zapfen 65 eingreift. Im abgesenkten, in Fig. 13 dargestellten Zustand des vorderen Endes des Trägers 62 kann der Zapfen 66 in einer Führungsbahn der Führungsschiene 20B verschoben werden.

In dem Führungsschieneneinsatz 68 zur Lagerung des Zapfens 66 des hinteren Trägers 62 ist auch die Führungsbahn 58 für den Stabilisierungszapfen 56 des vorderen Ausstellhebels 38 ausgebildet.

Der hintere Antriebsschlitten 32 hat des Weiteren eine Steuerbahn 70, in der ein Bolzen 72 eines so genannten Hub- und Senkhebels 74 für den hinteren Träger 62 geführt ist und die einen hinteren ersten Abschnitt A, einen zweiten Abschnitt B, der höher liegt als der erste Abschnitt A, einen dritten Abschnitt C umfasst, der auf der Höhe des ersten Abschnitts A liegt, und einen vorderen vierten Abschnitt, der niedriger als die Abschnitte A, B und C liegt. Die Anordnung der Abschnitte A bis D bezieht sich auf die herkömmliche Ausrichtung eines Fahrzeugs.

Der Hub- und Senkhebel 74 hat einen im Wesentlichen umgekehrt U-förmigen Querschnitt. Der hintere Antriebsschlitten 32 ist zwischen den beiden Schenkeln des Hub- und Senkhebels 74 in Fahrzeuglängsrichtung verfahrbar. An seinem vorderen Ende ist der Hub- und Senkhebel 74 beidseits an Gleitelementen 76 drehbar gelagert, die in Führungsbahnen in der Führungsschiene 20B verschiebbar geführt sind. An seinem den Gleitelementen 76 abgewandten Ende ist der Hub- und Senkhebel 74 über einen Bolzen 78 im mittleren Bereich eines so genannten Verstärkungshebels 80 angelenkt, der mit seinem hinteren Ende drehbar an in einer Führungsbahn der Führungsschiene 20B geführten Gleitelementen 82 gelagert ist. An seinem den Gleitelementen 82 abgewandten Ende ist der Verstärkungshebel 80 über einen Bolzen 84 an dem Träger 62 des hinteren Deckelelements 16 angelenkt. Der Verstärkungshebel 80 bewirkt, dass die durch die Einwirkung des Antriebsschlittens 32 erfolgende Bewegung des Hub- und Senkhebels 74 in verstärkter Form auf den Träger 62 und damit auf das hintere Deckelelement 16 übertragen wird.

Zur Begrenzung der Ausstellbewegung des Trägers 62 ist an dem Hub- und Senkhebel 74 ein Anschlag 86 ausgebildet, der mit einem Vorsprung 88 des Verstärkungshebels 80 zusammenwirkt.

Der Betätigungsmechanismus 28 arbeitet in nachfolgend beschriebener Weise.

Ausgehend von der in Fig. 1 dargestellten Anordnung, in der die beiden Deckelelemente 14 und 16 geschlossen sind, wird die aus den Antriebsschlitten 30 und 32 und über die Antriebskabelplatte 34 gebildete Schlitteneinheit in der Führungsschiene 20B in Richtung Fahrzeugheck verfahren. Hierbei erfährt zunächst das vordere Deckelelement 14, wie oben beschrieben, durch die von dem vorderen Antriebsschlitten 30 auf den Sicherungsstift 60 wirkende Kraft einen geringfügigen Versatz in Richtung Fahrzeugheck.

Durch ein Weiterverfahren der Schlitteneinheit wird sowohl das vordere Deckelelement 14 als auch das hintere Deckelelement 16 ausgestellt. Dies erfolgt dadurch, dass der Ausstellhebel 38, der mit dem vorderen Träger 42 verbunden ist, durch die Wirkung der Steuerbahn 50 eine Ausstellbewegung erfährt, und der Zapfen 72 des Hub- und Senkhebels 74 für den hinteren Träger 62 in den erhöhten Abschnitt B der Steuerbahn 70 gebracht wird, so dass der Hub- und Senkhebel 74 und damit über den Verstärkungshebel 80 der hintere Träger 62 ausgeschwenkt werden. Die Schwenkachse des hinteren Trägers 62 wird dabei von dem Schwenkzapfen 66 an dessen vorderem Ende gebildet.

Ein Weiterverfahren der Schlitteneinheit bewirkt ein Zurückschwenken des hinteren Deckelelements 16 in Schließstellung. Der Zapfen 72 liegt dann im Abschnitt C der Steuerbahn 70. Ein Weiterverfahren der Antriebsschlitten 30 und 32 bewirkt, dass zum Einen durch die dem hinteren Träger'62 zugeordnete Kulissenbahn 63 in dem vorderen Schlitten 30 das vordere Ende des hinteren Trägers 62 abgesenkt wird und durch die Wirkung der Steuerbahn 70 des hinteren Antriebsschlittens 32 der Hub- und Senkhebel 74 und damit über den Verstärkungshebel 80 der hintere Träger 62 eine Absenkung erfährt. Der Zapfen 72 des Hub- und Senkhebels 74 liegt dann in dem Abschnitt D der Steuerbahn 70. Die Absenkung des Trägers 62 erfolgt derart, dass das hintere Deckelelement unterhalb des rückwärtigen Dachhautbereichs 18 angeordnet ist und unter diesen verfahren werden kann. Das Verfahren des hinteren Deckelelementes 16 wird durch ein Weiterverfahren der Schlitteneinheit 33 bewirkt, die dann auf den Hub- und Senkhebel 74 wirkt und der Träger 62 und die Gesamtheit aus Schlitteneinheit, Hub- und Senkhebel 74, Verstärkungshebel 80, Träger 62 und zugehörigem hinteren Deckelelement 16 unter den rückwärtigen Dachhautbereich 18 verfährt.

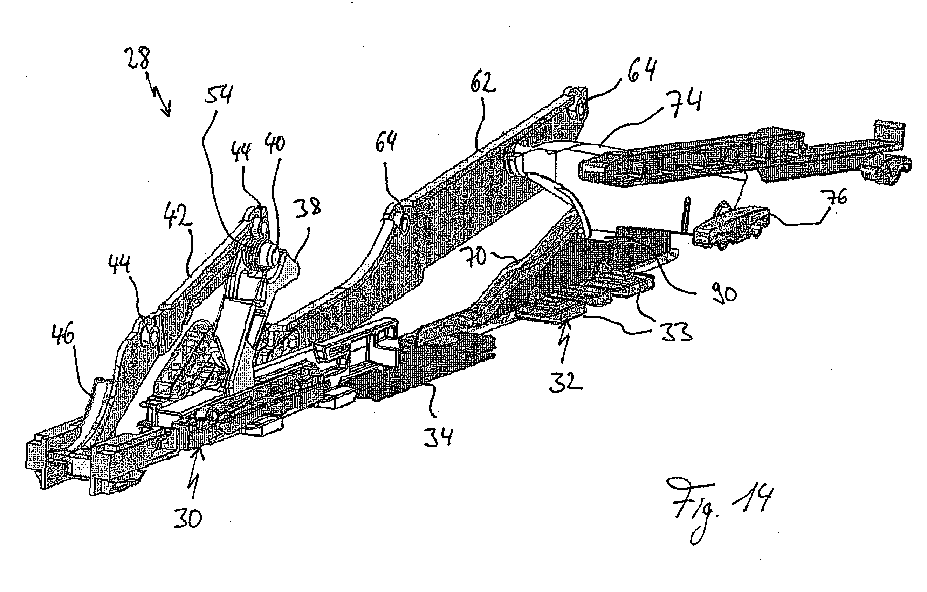

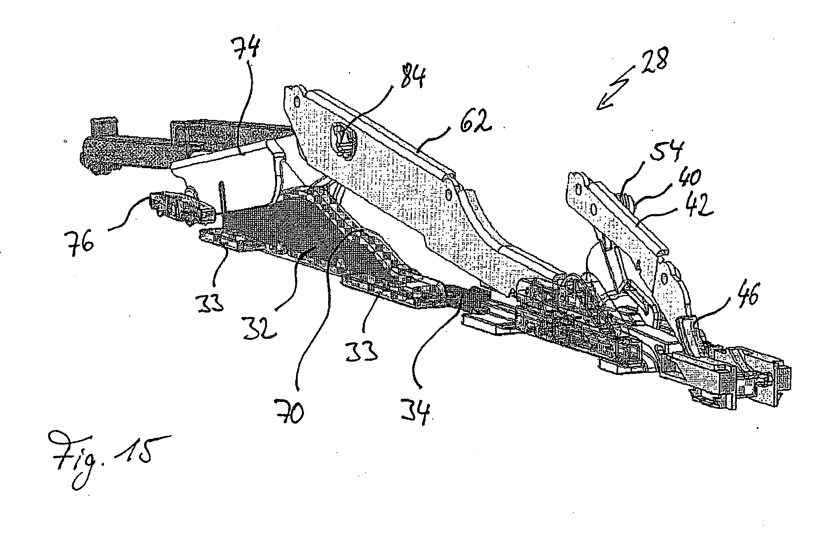

In den Figuren 14 und 15 ist eine alternative Ausführungsform eines Betätigungsmechanismus 28 dargestellt, der zum Antrieb der beiden Deckelelemente 14 und 16 in der im Zusammenhang mit dem Ausführungsbeispiel nach den Figuren 6 bis 13 beschriebenen Weise benutzt werden kann. Entsprechend dieser ersten Ausführungsform umfasst der in den Figuren 14 und 15 dargestellte Betätigungsmechanismus 28 eine aus einem vorderen Antriebsschlitten 30 und einem hinteren Antriebsschlitten 32 bestehende Schlitteneinheit, die mit einer Antriebskabelplatte 34 versehen ist, an welcher das hier nicht näher dargestellte Antriebskabel befestigt ist.

Der vordere Antriebsschlitten 30, der auf das vordere Deckelelement 14 wirkt, dient ebenfalls dazu, dieses auszustellen und wieder zurück in Schließstellung zu bringen. Entsprechend der ersten Ausführungsform wirkt der vordere Antriebsschlitten 30 auf einen Ausstellhebel 38, der über eine Gelenkachse 40 mit einem an seinem vorderen Ende schwenkbar gelagerten Träger 42 für das vordere Deckelelement 14 verbunden ist. Die Fixierung des Deckelelements 14 an dem Träger 42 erfolgt über zwei Bohrungen 44. An seinem vorderen Ende ist der Träger 42 ebenfalls mit einer Drehlagerzunge 46 versehen.

Das Ausstellen des Ausstellhebels 38 bzw. des vorderen Deckelelements 14 erfolgt in der im Zusammenhang mit der ersten Ausführungsform beschriebenen weise und mit entsprechenden Mitteln, wobei die Ausstellbewegung ebenfalls durch eine im Bereich der Gelenkachse 40 gelagerte Spiralfeder 54 unterstützt ist, die zwei Schenkel aufweist, von denen einer an dem Träger 42 und der andere an dem Ausstellhebel 38 angreift. Die Spiralfeder 54 unterstützt somit das Aufspreizen des Trägers 42 und des Ausstellhebels 38 und sichert die ausgestellte Anordnung des vorderen Deckelelements 14.

Der hintere Antriebsschlitten 32, der über Gleitelemente 33 in Fahrzeuglängsrichtung verschiebbar in Führungsbahnen der betreffenden Führungsschiene geführt ist, dient zur Verstellung des hinteren Deckelelements 16, das beidseits an einem sich in Fahrzeuglängsrichtung erstreckenden Träger 62 fixiert ist, welcher hierzu mit zwei Fixierbohrungen 64 versehen ist.

Die Lagerung des Trägers 62 an seinem vorderen Ende entspricht derjenigen des Trägers 62 der ersten Ausführungsgform.

Hingegen unterscheidet sich diese Ausführungsform von der ersten Ausführungsform dadurch, dass an dem Antriebsschlitten 32 eine Steuerbahn 70 ausgebildet ist, die an der Oberseite eines T-förmigen Abschnitts des Antriebsschlittens 32 in Form eines verbreiterten Führungsbandes ausgebildet ist, an dem ein Hub- und Senkhebel 74 über eine als Abkantung des Hub- und Senkhebels 74 ausgebildete Führungsklaue 90 geführt ist, die das Führungsband untergreift. Die Steuerbahn 70 ist also an der Oberseite des hinteren Antriebsschlittens 32 und nicht wie bei der ersten Ausführungsform in Form eines Schlitzes bzw. einer Ausnehmung ausgebildet.

Der Hub- und Senkhebel 74 ist an seinem unteren und hinteren Ende über Gleitelemente 76 in einer Führungsbahn der betreffenden Führungsschiene geführt und an seinem den Gleitelementen 82 abgewandten Ende über einen Bolzen 84 an dem Träger 62 drehbar gelagert. Der Hub- und Senkhebel 74 wirkt mithin direkt auf den Träger 62. Eine solche Ausführung zeichnet sich durch eine hohe Steifigkeit aus und verleiht dem hinteren Deckelelement 16 eine besonders stabile Lagerung. Anders als bei der Ausführungsform nach den Figuren 6 bis 13 wurde auf die Ausbildung eines Verstärkungshebels verzichtet.

Die Bewegungsabfolge des hinteren Deckelelements 16, welche durch die im Wesentlichen entsprechend der Steuerbahn der ersten Ausführungsform verlaufende Steuerbahn 70 vorgegeben wird, ist ebenfalls derart, dass ein Verfahren der Schlitteneinheit in Richtung Fahrzeugheck ausgehend von einer.Schließstellung zunächst ein Ausschwenken des hinteren Deckelelements 16, ein Weiterverfahren der Schlitteneinheit in der gleichen Richtung ein Zurückschwenken und Absenken des hinteren Deckelelements 16 und dann ein Zurückziehen des hinteren Deckelelements 16 unter einen rückwärtigen Dachhautabschnitt bewirkt, wobei das vordere Deckelelement 14 bei geöffnetem hinteren Deckelelement 16 stets ausgeschwenkt bleibt.

### Bezugszeichen

- 10: Fahrzeugdach
- 12: Dachöffnung
- 14: vorderes Deckelelement
- 16: hinteres Deckelelement
- 18: Dachhautbereich
- 20A, 20B: Führungsschiene
- 22: Dachkassette
- 24: Elektromotor
- 26A, 26B: Antriebskabel
- 28: Betätigungsmechanismus
- 30: vorderer Antriebsschlitten
- 31: Gleitelemente
- 32: hinterer Antriebsschlitten
- 33: Gleitelemente
- 34: Antriebskabelplatte
- 36: Führungsabschnitt
- 38: Ausstellhebel
- 40: Gelenkachse
- 42: Träger
- 44: Bohrung
- 46: Drehlagerzunge
- 48: Führungseinrichtung
- 50: Steuerbahn
- 52: Zapfen
- 54: Spiralfeder
- 56: Führungszapfen
- 57: Führungszapfen
- 58: Führungsbahn
- 59: Führungsbahn
- 60: Sicherungsstift
- 61: Ausnehmung
- 62: Träger
- 63: Kulissenbahn
- 64: Fixierbohrung
- 65: Zapfen
- 66: Schwenkzapfen
- 68: Führungsschieneneinsatz
- 70: Steuerbahn
- 72: Bolzen
- 74: Hub- und Senkhebel
- 76: Gleitelemente
- 78: Bolzen
- 80: Verstärkungshebel
- 82: Gleitelement
- 84: Bolzen
- 86: Anschlag
- 88: Vorsprung
- 90: Führungsklaue

## Patentansprüche

1. Fahrzeugdach, mit mindestens zwei eine Dachöffnung (12) wahlweise verschließenden oder wenigstens teilweise freigebenden Deckelelementen (14, 16), von denen ein vorderes mit seiner Hinterkante über einen festen Fahrzeugdachbereich ausstellbar ist und von denen ein hinteres als Schiebedeckel dient, unter den festen Fahrzeugdachbereich absenkbar und entlang von beidseits der Dachöffnung (12) angeordneten, dachfesten Führungsschienen (20A, 20B) verfahrbar ist, und mit einem Betätigungsmechanismus für die beiden Deckelelemente (14, 16), **dadurch gekennzeichnet, dass** der Betätigungsmechanismus für jede Führungsschiene (20A, 20B) einen Antriebsschlitten (30, 32) umfasst, der mit einer Steuerbahn (50) versehen ist, die zum Verschwenken des vorderen Deckelelements (14) mit einem Ausstellhebel (38) für das vordere Deckelelement (14) zusammenwirkt, der an einen schwenkbaren Träger (42) des vorderen Deckelelements (14) angelenkt ist, und dass eine Ausstellbewegung des Ausstellhebels (38) mittels einer Feder (40) unterstützt wird.

2. Fahrzeugdach nach Anspruch 1, **dadurch gekennzeichnet, dass** die Feder (40) mit einem Schenkel auf den Träger (42) und mit einem anderen Schenkel auf den Ausstellhebel (38) wirkt.

3. Fahrzeugdach nach Anspruch 1 oder 2, **dadurch gekennzeichnet, dass** die Feder (40) eine Spiralfeder ist.

4. Fahrzeugdach nach einem der Ansprüche 1 bis 3, **dadurch gekennzeichnet, dass** der Ausstellhebel (38) bei seiner Ausstellbewegung über mindestens einen Führungszapfen (56, 57) in einer führungsschienenfesten Führungsbahn (58, 59) geführt ist.

5. Fahrzeugdach nach einem der Ansprüche 1 bis 4, **dadurch gekennzeichnet, dass** der Ausstellhebel (38) einen Sicherungszapfen (60) aufweist, der zur Sicherung der Schließstellung des vorderen Deckelelementes (14) in eine Ausnehmung (61) des Antriebsschlittens (30) eingreift und an einer oberen Wandung des Antriebsschlittens (30) anliegt.

6. Fahrzeugdach nach einem der Ansprüche 1 bis 5, **dadurch gekennzeichnet, dass** der Träger (42) mit einer Drehlagerzunge (46) versehen ist, die vorzugsweise mit einer Kunststoffumspritzung versehen ist.

7. Fahrzeugdach nach einem der Ansprüche 1 bis 6, **dadurch gekennzeichnet, dass** der Ausstellhebel (38) im Wesentlichen umgekehrt U-förmig ausgebildet ist und der Antriebsschlitten (30) zwischen zwei Schenkeln des Ausstellhebels (38) verfahrbar ist.

8. Fahrzeugdach mit mindestens zwei eine Dachöffnung (12) wahlweise verschließenden oder wenigstens teilweise freigebenden Deckelelementen (14, 16), von denen ein vorderes mit seiner Hinterkante über einen festen Fahrzeugdachbereich ausstellbar ist, und von denen ein hinteres als Schiebedeckel dient, unter den festen Fahrzeugdachbereich absenkbar und entlang von beidseits der Dachöffnung (12) angeordneten, dachfesten Führungsschienen (20A, 20B) verfahrbar ist, und mit einem Betätigungsmechanismus für die beiden Deckelelemente (14, 16), **dadurch gekennzeichnet, dass** der Betätigungsmechanismus für jede Führungsschiene (20A, 20B) eine Schlitteneinheit umfasst, die für das vordere Deckelelement (14) und das hintere Deckelelement (16) jeweils eine Steuerbahn (50, 70) umfasst, wobei die Steuerbahnen (50, 70) derartig ausgebildet sind, dass ein Verfahren der Schlitteneinheiten in Richtung Fahrzeugheck ausgehend von einer Schließstellung der beiden Deckelelemente (14, 16) zunächst ein Ausschwenken der beiden Deckelelemente (14, 16) in Lüftstellung, ein Weiterverfahren der Schlitteneinheiten in der gleichen Richtung ein Zurückschwenken und Absenken des hinteren Deckelelementes (16) und dann ein Zurückziehen des hinteren-Deckelelementes (16) unter einen rückwärtigen Dachhautabschnitt (18) bewirkt.

9. Fahrzeugdach nach Anspruch 8, **dadurch gekennzeichnet, dass** die Steuerbahn (70) für das hintere Deckelelement (16) zum Verschwenken des hinteren Deckelelementes (16) mit einem auf das hintere Deckelelement (16) wirkenden Hub- und Senkhebel (74) zusammenwirkt.

10. Fahrzeugdach nach Anspruch 9, **dadurch gekennzeichnet, dass** der Hub- und Senkhebel (74) für das hintere Deckelelement (16) mit einem Ende verschwenkbar in einer Führungsbahn der betreffenden Führungsschiene (20A, 20B) geführt ist.

11. Fahrzeugdach nach Anspruch 9 oder 10, **dadurch gekennzeichnet, dass** der Hub- und Senkhebel (74) auf einen Verstärkungshebel (80) wirkt, der mit einem Ende verschwenkbar in einer Führungsbahn der betreffenden Führungsschiene (20A, 20B) geführt ist und mit seinem anderen Ende auf das hintere Deckelelement (16) wirkt.

12. Fahrzeugdach nach Anspruch 11, **dadurch gekennzeichnet, dass** an dem Hub- und Senkhebel (74) ein Anschlag (86) für den Verstärkungshebel (80) ausgebildet ist und der Anschlag (86) die Ausstellbewegung des hinteren Deckelelementes (16) begrenzt.

13. Fahrzeugdach nach einem der Ansprüche 8 bis 12, **dadurch gekennzeichnet, dass** die Schlitteneinheit einen vorderen Antriebsschlitten (30), der mit dem vorderen Deckelelement (14) zusammenwirkt, und einen hinteren Antriebsschlitten (32) umfasst, der mit dem hinteren Deckelelement (16) zusammenwirkt.

14. Fahrzeugdach nach Anspruch 13, **dadurch gekennzeichnet, dass** die beiden Antriebsschlitten (30, 32) über eine Antriebskabelplatte (34) miteinander verbunden sind, an der ein drucksteifes Antriebskabel (26A, 26B) fixiert ist und die vorzugsweise mit einem Führungsabschnitt (36) versehen ist, der in einer Führungsbahn der zugeordneten Führungsschiene (20A, 20B) verschiebbar gelagert ist.

15. Fahrzeugdach nach Anspruch 13 oder 14, **dadurch gekennzeichnet, dass** der vordere Antriebsschlitten (30) eine Kulissenbahn (63) zum Absenken eines vorderen Endes eines Trägers (62) des hinteren Deckelelementes (16) hat.

16. Fahrzeugdach nach Anspruch 15, **dadurch gekennzeichnet, dass** der Träger (62) für das hintere Deckelelement (16) zum Verschwenken an seinem vorderen Ende über einen Schwenkzapfen (66) in einem eine Schwenkachse definierenden Führungsschieneneinsatz (68) gelagert ist.

17. Fahrzeugdach nach Anspruch 16, **dadurch gekennzeichnet, dass** der Führungsschieneneinsatz (68) eine Führungsbahn (59) für einen Führungszapfen (57) eines Ausstellhebels (38) des vorderen Deckelelementes (14) aufweist.

## Claims

1. Vehicle roof with at least two cover elements (14, 16) which optionally close or at least partially open up a roof opening (12), of which a front cover element can be displaced with its rear edge above a fixed vehicle roof region and of which a rear cover element serves as a sliding cover, can be lowered under the fixed vehicle roof region and can be displaced along guide rails (20A, 20B) which are arranged on both sides of the roof opening (12) and are fixed on the roof, and with an actuating mechanism for the two cover elements (14, 16), **characterized in that** the actuating mechanism for each guide rail (20A, 20B) comprises a driving slide (30, 32) which is provided with a control track (50) which, for the pivoting of the front cover element (14), interacts with a displacement lever (38) for the front cover element (14), the displacement lever being coupled to a pivotable support (42) of the front cover element (14), and **in that** a displacement movement of the displacement lever (38) is assisted by means of a spring (40).

2. Vehicle roof according to Claim 1, **characterized in that** the spring (40) acts on the support (42) with one leg and on the displacement lever (38) with another leg.

3. Vehicle roof according to Claim 1 or 2, **characterized in that** the spring (40) is a spiral spring.

4. Vehicle roof according to one of Claims 1 to 3, **characterized in that** the displacement lever (38) is guided during its displacement movement via at least one guide peg (56, 57) in a guide track (58, 59) fixed on the guide rails.

5. Vehicle roof according to one of Claims 1 to 4, **characterized in that** the displacement lever (38) has a securing peg (60) which, for securing the closed position of the front cover element (14), engages in a recess (61) of the driving slide (30) and bears against an upper wall of the driving slide (30).

6. Vehicle roof according to one of Claims 1 to 5, **characterized in that** the support (42) is provided with a rotary bearing tongue (46) which is preferably provided with a plastic encapsulation by injection molding.

7. Vehicle roof according to one of Claims 1 to 6, **characterized in that** the displacement lever (38) is of essentially inverted U-shaped design and the driving slide (30) can be displaced between two limbs of the displacement lever (38).

8. Vehicle roof with at least two cover elements (14, 16) which optionally close or at least partially open up a roof opening (12), of which a front cover element can be displaced with its rear edge above a fixed vehicle roof region and of which a rear cover element serves as a sliding cover, can be lowered under the fixed vehicle roof region and can be displaced along guide rails (20A, 20B) which are arranged on both sides of the roof opening (12) and are fixed on the roof, and with an actuating mechanism for the two cover elements (14, 16), **characterized in that** the actuating mechanism for each guide rail (20A, 20B) comprises a slide unit which comprises a respective control track (50, 70) for the front cover element (14) and the rear cover element (16), the control tracks (50, 70) being designed in such a manner that, starting from a closed position of the two cover elements (14, 16), a displacement of the slide units in the direction of the vehicle rear firstly causes the two cover elements (14, 16) to be pivoted out into a ventilation position, a further displacement of the slide units in the same direction causes the rear cover element (16) to be pivoted back and lowered, and then causes the rear cover element (16) to be pulled back under a rear roof skin section (18).

9. Vehicle roof according to Claim 8, **characterized in that**, for the pivoting of the rear cover element (16), the control track (70) for the rear cover element (16) interacts with a lifting and lowering lever (74) which acts on the rear cover element (16).

10. Vehicle roof according to Claim 9, **characterized in that** the lifting and lowering lever (74) for the rear cover element (16) is guided pivotably with one end in a guide track of the relevant guide rail (20A, 20B).

11. Vehicle roof according to Claim 9 or 10, **characterized in that** the lifting and lowering lever (74) acts on a reinforcing lever (80) which is guided pivotably with one end in a guide track of the relevant guide rail (20A, 20B) and acts on the rear cover element (16) with its other end.

12. Vehicle roof according to Claim 11, **characterized in that** a stop (86) for the reinforcing lever (80) is formed on the lifting and lowering lever (74), and the stop (86) limits the displacement movement of the rear cover element (16).

13. Vehicle roof according to one of Claims 8 to 12, **characterized in that** the slide unit comprises a front driving slide (30) which interacts with the front cover element (14), and a rear driving slide (32) which interacts with the rear cover element (16).

14. Vehicle roof according to Claim 13, **characterized in that** the two driving slides (30, 32) are connected to each other via a driving cable plate (34) on which a compression-resistant driving cable (26A, 26B) is fixed and which is preferably provided with a guide section (36) which is mounted displaceably in a guide track of the associated guide rail (20A, 20B).

15. Vehicle roof according to Claim 13 or 14, **characterized in that** the front driving slide (30) has a slotted guide track (63) for the lowering of a front end of a support (62) of the rear cover element (16).

16. Vehicle roof according to Claim 15, **characterized in that**, for the pivoting operation, the support (62) for the rear cover element (16) is mounted at its front end via a pivot peg (66) in a guide rail insert (68) defining a pivot axis.

17. Vehicle roof according to Claim 16, **characterized in that** the guide rail insert (68) has a guide track (59) for a guide peg (57) of a displacement lever (38) of the front cover element (14),

## Revendications

1. Toit de véhicule, comprenant au moins deux éléments de recouvrement (14, 16) fermant ou ouvrant au moins en partie, de manière sélective, une ouverture de toit (12), dont un élément de recouvrement avant peut être sorti avec son bord arrière par-dessus une partie fixe du toit du véhicule, et dont un élément de recouvrement arrière sert de recouvrement coulissant, peut être abaissé sous la partie fixe du toit du véhicule et peut être déplacé le long de rails de guidage (20A, 20B) fixés au toit, disposés de chaque côté de l'ouverture du toit (12), et comprenant un mécanisme d'actionnement pour les deux éléments de recouvrement (14, 16), **caractérisé en ce que** le mécanisme d'actionnement pour chaque rail de guidage (20A, 20B) comprend un chariot d'entraînement (30, 32) qui est pourvu d'une piste de commande (50) qui coopère avec un levier de sortie (38) pour l'élément de recouvrement avant (14) pour faire pivoter l'élément de recouvrement avant (14), lequel est articulé à un support pivotant (42) de l'élément de recouvrement avant (14), et **en ce qu'**un mouvement de sortie du levier de sortie (38) est assisté au moyen d'un ressort (40).

2. Toit de véhicule selon la revendication 1, **caractérisé en ce que** le ressort (40) agit avec une branche sur le support (42) et avec une autre branche sur le levier de sortie (38).

3. Toit de véhicule selon la revendication 1 ou 2, **caractérisé en ce que** le ressort (40) est un ressort spiral.

4. Toit de véhicule selon l'une quelconque des revendications 1 à 3, **caractérisé en ce que** le levier de sortie (38), lors de son mouvement de sortie, est guidé par le biais d'au moins un tourillon de guidage (56, 57) dans une piste de guidage (58, 59) fixée aux rails de guidage.

5. Toit de véhicule selon l'une quelconque des revendications 1 à 4, **caractérisé en ce que** le levier de sortie (38) présente un tourillon de fixation (60) qui, pour la fixation de la position de fermeture de l'élément de recouvrement avant (14), vient en prise dans un évidement (61) du chariot d'entraînement (30) et s'applique contre une paroi supérieure du chariot d'entraînement (30).

6. Toit de véhicule selon l'une quelconque des revendications 1 à 5, **caractérisé en ce que** le support (42) est pourvu d'une langue de palier rotatif (46) qui est de préférence pourvue d'un surmoulage en plastique.

7. Toit de véhicule selon l'une quelconque des revendications 1 à 6, **caractérisé en ce que** le levier de sortie (38) est réalisé essentiellement en forme de U inversé et le chariot d'entraînement (30) peut être déplacé entre deux branches du levier de sortie (38).

8. Toit de véhicule comprenant au moins deux éléments de recouvrement (14, 16) fermant ou ouvrant au moins en partie, de manière sélective, une ouverture de toit (12), dont un élément de recouvrement avant peut être sorti avec son bord arrière par-dessus une partie fixe du toit du véhicule, et dont un élément de recouvrement arrière sert de recouvrement coulissant, peut être abaissé sous la partie fixe du toit du véhicule et peut être déplacé le long de rails de guidage (20A, 20B) fixés au toit, disposés de chaque côté de l'ouverture du toit (12), et comprenant un mécanisme d'actionnement pour les deux éléments de recouvrement (14, 16), **caractérisé en ce que** le mécanisme d'actionnement pour chaque rail de guidage (20A, 20B) comprend une unité de chariot qui comprend à chaque fois une piste de commande (50, 70) pour l'élément de recouvrement avant (14) et l'élément de recouvrement arrière (16), les pistes de commande (50, 70) étant réalisées de telle sorte qu'un déplacement des unités de chariot dans la direction de l'arrière du véhicule depuis une position de fermeture des deux éléments de recouvrement (14, 16) provoque d'abord une sortie par pivotement des deux éléments de recouvrement (14, 16) dans la position de ventilation, un déplacement poursuivi des unités de chariot dans la même direction provoquant un retour par pivotement et un abaissement de l'élément de recouvrement arrière (16), et ensuite un retrait de l'élément de recouvrement arrière (16) sous une portion d'habillage de toit arrière (18).

9. Toit de véhicule selon la revendication 8, **caractérisé en ce que** la piste de commande (70) pour l'élément de recouvrement arrière (16) coopère avec un levier de levage et d'abaissement (74) agissant sur l'élément de recouvrement arrière (16) pour faire pivoter l'élément de recouvrement arrière (16).

10. Toit de véhicule selon la revendication 9, **caractérisé en ce que** le levier de levage et d'abaissement (74) pour l'élément de recouvrement arrière (16) est guidé avec une extrémité de manière à pouvoir pivoter dans une piste de guidage du rail de guidage concerné (20A, 20B).

11. Toit de véhicule selon la revendication 9 ou 10, **caractérisé en ce que** le levier de levage et d'abaissement (74) agit sur un levier de renfort (80), qui est guidé avec une extrémité de manière à pouvoir pivoter dans une piste de guidage du rail de guidage concerné (20A, 20B) et qui agit avec son autre extrémité sur l'élément de recouvrement arrière (16).

12. Toit de véhicule selon la revendication 11, **caractérisé en ce qu'**une butée (86) pour le levier de renforcement (80) est réalisée sur le levier de levage et d'abaissement (74), et la butée (86) limite le mouvement de sortie de l'élément de recouvrement arrière (16).

13. Toit de véhicule selon l'une quelconque des revendications 8 à 12, **caractérisé en ce que** l'unité de chariot comprend un chariot d'entraînement avant (30) qui coopère avec l'élément de recouvrement avant (14), et un chariot d'entraînement arrière (32) qui coopère avec l'élément de recouvrement arrière (16).

14. Toit de véhicule selon la revendication 13, **caractérisé en ce que** les deux chariots d'entraînement (30, 32) sont connectés l'un à l'autre par le biais d'une plaque à câble d'entraînement (34), sur laquelle est fixé un câble d'entraînement rigide en compression (26A, 26B), et qui est de préférence pourvue d'une portion de guidage (36) qui est montée de manière déplaçable dans une piste de guidage du rail de guidage associé (20A, 20B).

15. Toit de véhicule selon la revendication 13 ou 14, **caractérisé en ce que** le chariot d'entraînement avant (30) a une piste à coulisse (63) pour abaisser une extrémité avant d'un support (62) de l'élément de recouvrement arrière (16).

16. Toit de véhicule selon la revendication 15, **caractérisé en ce que** le support (62) pour l'élément de recouvrement arrière (16) est monté dans un insert de rail de guidage (68) définissant un axe de pivotement en vue de pivoter au niveau de son extrémité avant par le biais d'un tourillon de pivotement (66).

17. Toit de véhicule selon la revendication 16, **caractérisé en ce que** l'insert de rail de guidage (68) présente une piste de guidage (59) pour un tourillon de guidage (57) d'un levier de sortie (38) de l'élément de recouvrement avant (14).
